# EUROPEAN PATENT SPECIFICATION

(11) **EP 4 451 362 B1**
(45) Date of publication and mention of the grant of the patent: **31.12.2025**
(21) Application number: 23211893.5
(22) Date of filing: 24.11.2023
(51) Int. Cl.: H01M 4/131, H01M 4/1391, H01M 4/505, H01M 4/525, C01B 25/45

(54) **LITHIUM SUPPLEMENT AGENT AND PREPARATION METHOD THEREOF, ELECTROCHEMICAL DEVICE, ELECTRONIC DEVICE**
LITHIUMERGÄNZUNGSMITTEL UND HERSTELLUNGSVERFAHREN DAFÜR, ELEKTROCHEMISCHE VORRICHTUNG, ELEKTRONISCHE VORRICHTUNG
AGENT DE COMPLÉMENT AU LITHIUM ET SON PROCÉDÉ DE PRÉPARATION, DISPOSITIF ÉLECTROCHIMIQUE, DISPOSITIF ÉLECTRONIQUE

(30) Priority: 20.04.2023 CN 202310432269
(43) Date of publication of application: 23.10.2024
(73) Proprietor: AESC Dynamics Technology (Jiangsu) Ltd., 214443 Wuxi City, Jiangsu Province (CN); AESC Intelligent Innovation Dynamics Technology (Shanghai) Ltd., Shanghai 201315 (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN)
(72) Inventor: WU, Guanhong, Pudong New Area Shanghai, 201315 (CN); ZHU, Jianping, Pudong New Area Shanghai, 201315 (CN); WANG, Wenxu, Pudong New Area Shanghai, 201315 (CN); MO, Fangjie, Pudong New Area Shanghai, 201315 (CN); SUN, Huayu, Pudong New Area Shanghai, 201315 (CN)
(74) Representative: Becker, Eberhard

(56) References cited:
- CN-A- 115 548 274
- US-A1- 2009 127 520
- T. A. ARUNKUMAR: "Factors Influencing the Irreversible Oxygen Loss and Reversible Capacity in Layered Li[Li 1/3 Mn 2/ 3 ]O 2 -Li[M]O 2 (M = Mn 0.5- y Ni 0.5- y Co 2 y and Ni 1- y Co y ) Solid Solutions", CHEMISTRY OF MATERIALS, vol. 19, no. 12, 1 June 2007 (2007-06-01), US, pages 3067 - 3073, XP093152977, ISSN: 0897-4756, DOI: 10.1021/cm070389q
- JING LI: "Synthesis and Characterization of the Lithium-Rich Core-Shell Cathodes with Low Irreversible Capacity and Mitigated Voltage Fade", CHEMISTRY OF MATERIALS, vol. 27, no. 9, 12 May 2015 (2015-05-12), US, pages 3366 - 3377, XP093152970, ISSN: 0897-4756, DOI: 10.1021/acs.chemmater.5b00617

## Description

### BACKGROUND OF THE INVENTION

### Field of the Invention

The invention specifically relates to a lithium supplement agent and a preparation method thereof, an electrochemical device, and an electronic device.

### Description of Related Art

In a lithium-ion battery, the lower initial coulombic efficiency of the positive and negative electrodes determines the initial efficiency of the entire battery. When the efficiency of the positive and negative electrodes is equal, the utilization rate of active lithium in the battery is the highest. The initial efficiency of current commercial systems is limited by the lower initial efficiency of the negative electrode. Therefore, a lot of active Li provided by the positive electrode is consumed, reducing the overall energy density of the battery.

Several widely studied Li-ion supplementary materials currently exist: Li₅FeO₄(LFO), Li₂NiO₂(LNO), and Li₆CoO₄(LCO), which all have extremely high theoretical capacity and extremely poor reversibility (coulombic efficiency<10%), and are therefore ideal lithium supplement additives (i.e., positive electrode lithium supplement agent). However, LFO, LNO, and LCO are unstable in the air, and readily absorb moisture to form residual alkali (Li₂CO₃, LiOH), which not only reduces the electrochemical activity thereof, but also causes battery gas to form, causing battery swelling and causing safety hazards.

Based on the above studies, it is necessary to provide a lithium supplement agent that may be used as a positive electrode material to achieve better stability and high theoretical capacity, so as to improve the energy density and cycle stability of the battery.

### SUMMARY OF THE INVENTION

The technical issue to be solved by the invention is to overcome the instability of existing lithium supplement additives in the air, resulting in a decrease in the electrochemical activity thereof. When existing lithium supplement additives are used in a lithium-ion battery, gas production occurs in the battery, thus causing potential safety hazards. A lithium supplement agent and a preparation method thereof, a positive electrode sheet, an electrochemical device, and an electronic device are thus provided. A positive electrode material containing the lithium-supplement agent of the invention has better stability and high theoretical capacity, and is used in a lithium-ion battery to improve the energy density and cycle stability of the battery.

The invention solves the above technical issues via the following technical solutions.

**In the first aspect, the invention provides a lithium supplement agent,** including a component A and a component B; a general chemical formula of the component A is: Li₆₋ₓM¹_{1-y}N¹_{y}O_{4-z}, wherein 0≤x≤5.95, 0≤y≤1, 0≤z≤2, M¹ is selected from one or a plurality of Fe, Ni, Co, Cu, Al, Mn, Ti, and Si; N¹ is selected from one or a plurality of Fe, Ni, Co, Cu, Al, Mn, Ti, and Si; a general chemical formula of the component B is: Li_{1+(a/(2+a))}Mn_{2a/(2+a)}M²_{6/(2+a)-2}O₂, 0.2≤a≤1, M² is selected from one or a plurality of Fe, Ni, Co, Cu, Al, Mn, Ti, Si, Mg, Zr, Nb, La, Sr, and W; the component B is at least partially located at a surface of the component A.

**In the second aspect, the invention also provides a preparation method of the lithium supplement agent,** including the following steps: mixing and sintering precursors of the component A and the component B to obtain the lithium supplement agent.

**In the third aspect, the invention also provides an electrochemical device,** including the positive electrode sheet, a negative electrode sheet, a separator, and an electrolyte.

**In the fourth aspect, the invention also provides an electronic device,** including the positive electrode material or the lithium-ion secondary battery.

**In the fifth aspect, the invention also provides a positive electrode material,** including an active substance and a lithium supplement agent, and in the positive electrode material, a mass percentage of the lithium supplement agent is 0.5% to 31%.

The positive progress effect of the invention is:
The positive electrode material containing the lithium-supplement agent of the invention has better stability and high theoretical capacity, and is used in a lithium-ion battery to improve the energy density and cycle stability of the battery.

### DESCRIPTION OF THE EMBODIMENTS

The invention is further illustrated below by means of examples, but the invention is not limited to the scope of the examples. For the experimental methods that do not specify specific conditions in the following examples, selection is made according to conventional methods and conditions, or according to product instructions.

### In the lithium supplement agent of the first aspect of the invention,

Preferably, the M¹ is Fe, Ni, Co, Cu, Al, Mn, Ti, or Si.

Preferably, the N¹ is Fe, Ni, Co, Cu, Al, Mn, Ti, or Si.

Preferably, the M² is Fe, Ni, Co, Cu, Al, Mn, Ti, Si, Mg, Zr, Nb, La, Sr, or W.

Preferably, the value range of the x is 0≤x≤5, such as 0.4, 0.5, 0.8, 1, 2, or 4.

Preferably, the value range of the y is 0≤y≤0.9, such as 0.2, 0.5, 0.6, or 0.8.

Preferably, the value range of the z is 0≤z≤2, such as 0.4, 0.5, 0.8, 1, or 1.5.

Preferably, the value range of the a is 0.22≤a≤1, such as 0.3, 0.5, 0.7, or 0.8.

Preferably, the component B is at least partially coated at the surface of the component A. Preferably, the mass percentage of the component A to the total mass of "the component A and the component B" is 89% to 99.1%, such as 90%, 92%, 95%, 96%, 97%, 98%, or 99%.

Preferably, the lithium supplement is a core-shell structure. The average particle diameter of the core of the core-shell structure may be 0.5 µm to 15 µm. The average thickness of the shell of the core-shell structure may be 20 nm to 200 nm.

In some preferred embodiments of the invention, the chemical formula of the lithium supplement agent is ALi₅₊ₑFe₁₋ₑCoₑO₄@(1-A)Li_{1.33}MnO₂ or ALi₂Ni_{1-f}Cu_{f}O₂@(1-A)Li_{1.33}MnO₂;
wherein 0.8≤A<1; 0≤e≤1; 0≤f≤1;

The A represents the mass percentage of Li₅₊ₑFe₁₋ₑCoₑO₄ in Li₅₊ₑFe₁₋ₑCoₑO₄@Li_{1.33}MnO₂, or the mass percentage of Li₂Ni_{1-f}Cu_{f}O₂ in Li₂Ni_{1-f}Cu_{f}O₂@Li_{1.33}MnO₂.

In some preferred embodiments of the invention, the value range of the A is preferably 0.89≤A≤0.991, such as 0.9, 0.96, 0.97, 0.98, or 0.99.

In some preferred embodiments of the invention, the value range of the e is 0.2≤e≤1, such as 0.5 or 0.4.

In some preferred embodiments of the invention, the value range of the f is 0.5≤f≤1, such as 0.8.

In some preferred embodiments of the invention, the general chemical formula of the component A is: Li₆₋ₓM¹_{1-y}N¹_{y}O_{4-z}, wherein 0≤x≤5.95, 0≤y≤1, 0≤z≤2, M¹ is Fe, Ni, Co, Cu, Al, Mn, Ti, or Si; N¹ is Fe, Ni, Co, Cu, Al, Mn, Ti, or Si; the general chemical formula of the component B is: Li_{1+(a/(2+a))}Mn_{2a/(2+a)}M²_{6/(2+a)-2}O₂, 0.2≤a≤1, M² is Fe, Ni, Co, Cu, Al, Mn, Ti, Si, Mg, Zr, Nb, La, Sr, or W; the component B is at least partially coated at the surface of the component A.

In some preferred embodiments of the invention, the chemical formula of the component A is Li₂NiO₂, Li₂Ni_{0.5}Cu_{0.5}O₂, Li₂Ni_{0.8}Cu_{0.2}O₂, Li₂Ni_{0.4}Cu_{0.6}O₂, Li₂Cu₂O₂, Li₅FeO₄, Li_{5.5}Fe_{0.5}Co_{0.5}O₄, Li_{5.2}Fe_{0.8}Co_{0.2}O₄, Li_{5.6}Fe_{0.4}Co_{0.6}O₄, or Li₆CoO₄; the chemical formula of the component B is Li_{1.33}Mn_{0.67}O₂, Li_{1.26}Mn_{0.63}Ni_{0.11}O₂, Li_{1.2}Mn_{0.6}Ni_{0.2}O₂, or Li_{1.1}Mn_{0.75}Ni_{0.25}O₂.

In some preferred embodiments of the invention, the chemical formula of the component A is Li₂NiO₂, Li₂Ni_{0.5}Cu_{0.5}O₂, Li₂Ni_{0.8}Cu_{0.2}O₂, Li₂Ni_{0.4}Cu_{0.6}O₂, Li₂Cu₂O₂, Li₅FeO₄, Li_{5.5}Fe_{0.5}Co_{0.5}O₄, Li_{5.2}Fe_{0.8}Co_{0.2}O₄, Li_{5.6}Fe_{0.4}Co_{0.6}O₄, or Li₆CoO₄; the chemical formula of the component B is Li_{1.33}Mn_{0.67}O₂.

In some preferred embodiments of the invention, the chemical formula of the component A is Li₂NiO₂; the chemical formula of the component B is Li_{1.26}Mn_{0.63}Ni_{0.11}O₂, Li_{1.2}Mn_{0.6}Ni_{0.2}O₂, or Li_{1.1}Mn_{0.75}Ni_{0.25}O₂.

### In the preparation method of the lithium supplement agent of the second aspect of the invention,

Preferably, the precursors of the component A are firstly sintered to obtain the component A and then mixed with the precursors of the component B.

The precursors of the component A may be conventional precursors in the art that may be prepared to satisfy the general chemical formula of the component A as mentioned above, such as Li₂O and NiO, or Fe₂O₃ and LiOH. Generally, for the amount of each component of the component A, the corresponding stoichiometric amount may be selected according to the chemical formula of the component A to be obtained.

The temperature and time of the primary sintering may be conventional temperature and time in the art. Generally, the desired primary sintering temperature and time are also different according to the type of the precursors of the selected component A. For example, when the precursors of the component A are Li₂O and NiO, the temperature of the primary sintering is 600 °C, and the time of the primary sintering is 12 hours. When the precursors of the component A are Fe₂O₃ and LiOH, the primary sintering is performed in two stages, wherein the temperature of the first stage is 450 °C, the time of the first stage is 12h, the temperature of the second stage is 600 °C, and the time of the second stage is 24h.

Preferably, the precursors of the component B may be conventional precursors in the art that may be prepared to satisfy the general chemical formula of the component B, such as MnCO₃ and Li₂CO₃. Generally, for the amount of each component of the component B, the corresponding stoichiometric amount may be selected according to the chemical formula of the component B to be obtained.

Preferably, the temperature and time of the sintering may be the conventional temperature and time in the art. Generally, the desired sintering temperature and time are also different according to the type of the precursors of the selected component B. For example, when the precursors of the component B are MnCO₃ and Li₂CO₃, the temperature of the sintering component is 500 °C, and the sintering time is 72h.

### In the positive electrode sheet of the third aspect of the invention,

Preferably, the mass percentage of the lithium supplement agent to the total mass of the positive electrode sheet is 0.5% to 31%, such as 0.9%, 1%, 2%, 5%, 10%, 15%, 18%, 20% %, 25%, 28%, or 30%.

Preferably, the lithium iron phosphate is LiFePO₄.

Preferably, the lithium manganese iron phosphate is LiMn_{0.6}Fe_{0.4}PO₄.

Preferably, the nickel-cobalt-manganese ternary material is LiNi_{0.9}Co_{0.06}Mn_{0.04}O₂.

Preferably, the lithium cobaltate is LiCoO₂.

Preferably, the lithium-rich manganese-based oxide is Li_{1.1}Ni_{0.4}Mn_{0.6}O₂.

Preferably, the lithium nickel manganese oxide is LiNi_{1.5}Mn_{0.5}O₄.

In some preferred embodiments of the invention, the active substance is lithium iron phosphate, lithium manganese iron phosphate, nickel-cobalt-manganese ternary material, lithium cobaltate, lithium-rich manganese-based oxide, or lithium manganese nickelate; the chemical formula of the lithium supplement agent is ALi₅₊ₑFe₁₋ₑCoₑO₄@(1-A)Li_{1.33}MnO₂ or ALi₂Ni_{1-f}Cu_{f}O₂@(1-A)Li_{1.33}MnO₂;

In particular, 0.8≤A < 1; 0≤e≤1; 0≤f≤1; the A represents the mass percentage of Li₅₊ₑFe₁₋ₑCoₑO₄ in Li₅₊ₑFe₁₋ₑCoₑO₄@Li_{1.33}MnO₂, or the mass percentage of Li₂Ni_{1-f}Cu_{f}O₂ in Li₂Ni_{1-f}Cu_{f}O₂@Li_{1.33}MnO₂.

In some preferred embodiments of the invention, the active substance is LiMn_{0.6}Fe_{0.4}PO₄, the lithium supplement agent is Li₂NiO₂@Li_{1.33}Mn_{0.67}O₂, Li₂Ni_{0.5}Cu_{0.5}O₂@Li_{1.33}Mn_{0.67}O₂, Li₂Ni_{0.8}Cu_{0.2}O_{2@}Li_{1.33}Mn_{0.67}O₂, Li₂Ni_{0.4}Cu_{0.6}O₂@Li_{1.33}Mn_{0.67}O₂, Li₂Cu₂O₂@Li_{1.33}Mn_{0.67}O₂, Li₅FeO₄@Li_{1.33}Mn_{0.67}O₂, Li_{5.5}Fe_{0.5}Co_{0.5}O_{4@}Li_{1.33}Mn_{0.67}O₂, Li_{5.2}Fe_{0.8}Co_{0.2}O₄@Li_{1.33}Mn_{0.67}O₂, Li_{5.6}Fe_{0.4}Co_{0.6}O₄@Li_{1.33}Mn_{0.67}O₂, Li₆CoO₄@Li_{1.33}Mn_{0.67}O₂, Li₂NiO₂@Li_{1.26}Mn_{0.63}Ni_{0.11}O₂, Li₂NiO₂@Li_{1.2}Mn_{0.6}Ni_{0.2}O₂, or Li₂NiO₂@Li_{1.1}Mn_{0.75}Ni_{0.25}O₂.

In some preferred embodiments of the invention, the active substance is LiMn_{0.6}Fe_{0.4}PO₄, LiFePO₄, LiNi_{0.9}Co_{0.06}Mn_{0.04}O₂, Li_{1.1}Ni_{0.4}Mn_{0.6}O₂, LiCoO₂, or LiNi_{1.5}Mn_{0.5}O₄, the lithium supplement agent is Li₂NiO₂@Li_{1.33}Mn_{0.67}O₂.

### In the preparation method of the positive electrode sheet of the fourth aspect of the invention,

Preferably, the positive electrode current collector may be a conventional positive electrode current collector in the art, generally aluminum foil.

Preferably, the drying method may be a conventional method in the art.

Preferably, the drying temperature may be a conventional temperature in the art, such as 120 °C.

Preferably, the drying time may be a conventional time in the art, such as 10 minutes.

Preferably, the slurry generally also contains a conductive agent, a solvent, and a binder.

In particular, the conductive agent may be a conventional conductive agent in the art, such as conductive carbon black (Super P).

In particular, the solvent may be a conventional solvent in the art, preferably nitrogen methylpyrrolidone (NMP).

In particular, the adhesive may be a conventional adhesive in the art, such as polyvinylidene fluoride (PVDF).

Preferably, when the slurry contains the active substance, the lithium supplement agent, the conductive agent, and the binder, the mass ratio of "the positive electrode active substance and the lithium supplement agent", the conductive agent, and the binder is (93-98):(1-4):(1-4), for example, 97:1.5 : 1.5.

In some preferred embodiments of the invention, the preparation method of the positive electrode sheet includes the following steps: coating the slurry containing the active substance and the lithium supplement agent on at least one surface of the aluminum foil, and drying at 120 °C for 10 minutes.

### In the positive electrode material of the seventh aspect of the invention,

Preferably, the value range of the A is 0.89≦A≦0.991, such as 0.9, 0.96, 0.97, 0.98, or 0.99.

Preferably, the value range of the e is 0.2≤e≤1, such as 0.5 or 0.4.

Preferably, the value range of the f is 0.5≤f≤1, such as 0.8.

Preferably, in the positive electrode material, the mass percentage of the lithium supplement agent is 0.9% to 31%, such as 1%, 2%, 5%, 10%, 15%, 18%, 20%, 25%, 28%, or 30%.

Preferably, the lithium iron phosphate is LiFePO₄.

Preferably, the lithium manganese iron phosphate is LiMn_{0.6}Fe_{0.4}PO₄.

Preferably, the nickel-cobalt-manganese ternary material is LiNi_{0.9}Co_{0.06}Mn_{0.04}O₂.

Preferably, the lithium cobaltate is LiCoO₂.

Preferably, the lithium-rich manganese-based oxide is Li_{1.1}Ni_{0.4}Mn_{0.6}O₂.

Preferably, the lithium nickel manganese oxide is LiNi_{1.5}Mn_{0.5}O₄.

In some preferred embodiments of the invention, the active substance is LiMn_{0.6}Fe_{0.4}PO₄, the lithium supplement agent is Li₂NiO₂@Li_{1.33}Mn_{0.67}O₂, Li₂Ni_{0.5}Cu_{0.5}O₂@Li_{1.33}Mn_{0.67}O₂, Li₂Ni_{0.8}Cu_{0.2}O₂@Li_{1.33}Mn_{0.67}O₂, Li₂Ni_{0.4}Cu_{0.6}O₂@Li_{1.33}Mn_{0.67}O₂, Li₂Cu₂O₂@Li_{1.33}Mn_{0.67}O₂, Li₅FeO₄@Li_{1.33}Mn_{0.67}O₂, Li_{5.5}Fe_{0.5}Co_{0.5}O₄@Li_{1.33}Mn_{0.67}O₂, Li_{5.2}Fe_{0.8}Co_{0.2}O₄@Li_{1.33}Mn_{0.67}O₂, Li_{5.6}Fe_{0.4}Co_{0.6}O₄@Li_{1.33}Mn_{0.67}O₂, Li₆CoO₄@Li_{1.33}Mn_{0.67}O₂, Li₂NiO₂@Li_{1.26}Mn_{0.63}Ni_{0.11}O₂, Li₂NiO₂@Li_{1.2}Mn_{0.6}Ni_{0.2}O₂, or Li₂NiO₂@Li_{1.1}Mn_{0.75}Ni_{0.25}O₂.

In some preferred embodiments of the invention, the active substance is LiMn_{0.6}Fe_{0.4}PO₄, LiFePO₄, LiNi_{0.9}Co_{0.06}Mn_{0.04}O₂, Li_{1.1}Ni_{0.4}Mn_{0.6}O₂, LiCoO₂, or LiNi_{1.5}Mn_{0.5}O₄, the lithium supplement agent is Li₂NiO₂@Li_{1.33}Mn_{0.67}O₂.

On the basis of conforming to common knowledge in the art, the above preferred conditions may be combined arbitrarily to obtain preferred examples of the invention.

### Example 1

The preparation process of the lithium supplement in Example 1 was as follows: first the component A was prepared, then the precursors of the component B were mixed with the component A, and the component B was generated at the surface of the component A. Specifically: Li₂O and NiO in a stoichiometric ratio were taken, ground and mixed, and then sintered at 600 °C under N₂ for 12h to obtain the component A (Li₂NiO₂). Then 0.9 M Li₂NiO₂ was taken and uniformly mixed with the precursors of the component B (0.02 M MnCO₃, 0.02 M Li₂CO₃) and sintered at 500 °C for 72h to prepare a lithium supplement agent (wherein the component A was partially coated at the surface of the component B, and the chemical formula is expressed as Li₂NiO₂@Li_{1.33}Mn_{0.67}O₂).

Example 1 the positive electrode material in the positive electrode sheet contained LiMn_{0.6}Fe_{0.4}PO₄ (the component C, the active substance) and Li₂NiO₂@Li_{1.33}MnO₂ (the component A+the component B, i.e., the lithium supplement agent), wherein the component C accounted for 92.15% of the total mass of "the component A+the component B+the component C+Super P+PVDF"; the mass percentage of "the component A+ the component B" to the total mass of "the component A+ the component B+ the component C" was 5%. The positive electrode material in the positive electrode sheet also contained conductive carbon black (Super P) and polyvinylidene fluoride (PVDF); LiMn_{0.6}Fe_{0.4}PO₄ did not react with Li₂NiO₂@Li_{1.33}MnO₂, and the two were only physically mixed; the mass ratio of "the component A+the component B+the component C", Super P, and PVDF was 97:1.5:1.5.

The preparation method of Example 1 positive electrode sheet included the following steps: first the active substance, Super P, and PVDF were mixed in the above ratio, and then gradually nitrogen methyl pyrrolidone (NMP) was added with high-speed stirring to prepare a positive electrode slurry with a certain viscosity. Then, the prepared slurry was evenly coated on the aluminum foil, and dried in a blast drying oven at 120 °C for 10 minutes. Lastly, the dried electrode sheet was rolled and cut to make a positive electrode sheet.

The specific preparation process of the lithium supplement agent in Example 24 was: Fe₂O₃ and LiOH were mixed at a ratio of 1: 10, then sintered at 450 °C for 12 hours under N₂, and cooled to form. After grinding, the mixture was sintered at 600 °C under N₂ for 24h to obtain LFO, i.e., the component A (Li₅FeO₄), and then 0.9 M Li₅FeO₄ was taken and uniformly mixed with the precursors of the component B (0.02 M MnCO₃, 0.02 M Li₂CO₃) and then sintered at 500 °C for 72h.

In Examples 2 to 6, except for changing the type of the component C in the positive electrode material (as shown in Table 2), other experimental conditions were all the same as in Example 1. The component C may be a conventional commercially available product.

In Examples 7 to 13, except for changing the mass percentage of "the component A+the component B" in the positive electrode material (as shown in Table 2), other experimental conditions were all the same as in Example 1.

In Examples 14 to 19, except for changing the mass percentage of the component A to the total mass of "the component A+the component B" (as shown in Table 2), other experimental conditions were all the same as in Example 1.

In Examples 20 to 28, except for changing the type of the component A (as shown in Table 1), other experimental conditions were all the same as in Example 1. When the component A was LixFeOy, the precursors of the component A were Fe₂O₃ and LiOH, and the relative mass ratio of the precursors may be adjusted according to the final chemical formula of the component A designed; when the component A was LixNiCuO, the precursors of the component A were NiO, CuO, and Li₂O, and the relative proportion of the amount of each precursor may be adjusted according to the chemical formula of the final component A designed.

In Examples 29 to 31, except for changing the type of the component B (as shown in Table 1), other experimental conditions were all the same as in Example 1. The precursors of the component B were Li₂CO₃, MnCO₃, NiCO₃, and CoCO₃, and the relative proportion of the amount of each precursor may be adjusted according to the chemical formula of the final component B designed.

The lithium supplement agents (the component A+the component B) prepared in Examples 1 to 31 were core-shell structures. In particular, the average particle diameter of the core was 0.5 µm to 15 µm, and the average thickness of the shell was 20 nm to 200 nm.

### Example 2

LiFePO₄ (the component C)
Li₂NiO₂@Li_{1.33}MnO₂ (the component A+ the component B)

In particular, the component C accounted for 92.15% of the total mass of "the component A+ the component B+ the component C+Super P+PVDF"; the mass percentage of "the component A+ the component B" to the total mass of "the component A+ the component B+ the component C" was 5%.
Cycle test voltage range: 2.5 V to 3.65 V

### Example 3

LiNi_{0.9}Co_{0.06}Mn_{0.04}O₂ (the component C)
Li₂NiO₂@Li_{1.33}MnO₂ (the component A+ the component B)

In particular, the component C accounted for 92.15% of the total mass of "the component A+ the component B+ the component C+Super P+PVDF"; the mass percentage of "the component A+ the component B" to the total mass of "the component A+ the component B+ the component C" was 5%.
Cycle test voltage range: 2.8 V to 4.2 V

### Example 4

LiNi_{1.5}Mn_{0.5}O₄ (the component C)
Li₂NiO₂@Li_{1.33}MnO₂ (the component A+ the component B)

In particular, the component C accounted for 92.15% of the total mass of "the component A+ the component B+ the component C+Super P+PVDF"; the mass percentage of "the component A+ the component B" to the total mass of "the component A+ the component B+ the component C" was 5%.
Cycle test voltage range: 2.8 V to 4.4.45 V

### Example 5

LiCoO₂ (the component C)
Li₂NiO₂@Li_{1.33}MnO₂ (the component A+ the component B)

In particular, the component C accounted for 92.15% of the total mass of "the component A+ the component B+ the component C+Super P+PVDF"; the mass percentage of "the component A+ the component B" to the total mass of "the component A+ the component B+ the component C" was 5%.
Cycle test voltage range: 2.8 V to 4.4.7V

The main condition parameters involved in the examples are as shown in the following Table 1.

**Table 1**

| Numbe ring | Component A + component B | Com pone nt A | x | y | z | M¹ | N¹ | Com pone nt B | M² | a | 1+(a/( 2+a)) | 2a/(2 +a) | 6/(2+ a)-2 |
|---|---|---|---|---|---|---|---|---|---|---|---|---|---|
| Exampl e 1 | Li₂NiO₂@L _{1.33}Mn_{0.67}O ₂ | Li₂Ni O₂ | 4 | 0 | 2 | Ni | / | Li_{1.33} Mn_{0.6 7}O₂ | / | 1 | 1.33 | 0.67 | 0 |
| Exampl e2 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 3 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e4 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e5 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e6 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e7 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e8 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e9 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 10 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 11 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 12 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 13 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 14 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 15 | Li₂NiO₂@ Li_{1.33}Mn_{0.67} O₂ | Li₂Ni O₂ | 4 | 0 | 2 | Ni | / | Li_{1.33} Mn_{0.6} 702 | / | 1 | 1.33 | 0.67 | 0 |
| Exampl e 16 | Li₂NiO₂@ Li_{1.33}M_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 17 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 18 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 19 | Li₂NiO₂@ Li_{1.33}Mn_{0.67} O₂ | Li₂Ni O₂ | 4 | 0 | 2 | Ni | / | Li_{1.33} Mn_{0.6 7}O₂ | / | 1 | 1.33 | 0.67 | 0 |
| Exampl e 20 | Li₂Ni_{0.5}Cu_{0. 5}O₂@ Li_{1.33}M_{0.67} O₂ | Li₂Ni _{0.5}Cu _{0.5}O₂ | 4 | 0.5 | 2 | Ni | Cu | Li_{1.33} Mn_{0.6 7}O₂ | / | 1 | 1.33 | 0.67 | 0 |
| Exampl e 21 | Li₂Ni_{0.8}Cu₀. ₂O₂@ Li_{1.33}Mn_{0.67} O₂ | Li₂Ni _{0.8}Cu _{0.2}O₂ | 4 | 0.2 | 2 | Ni | Cu | Li_{1.33} Mn_{0.6 7}O₂ | / | 1 | 1.33 | 0.67 | 0 |
| Exampl e 22 | Li₂Ni_{0.4}Cu_{0. 6}O₂@ Li_{1.33}Mn_{0.67} O₂ | Li₂Ni _{0.4}Cu _{0.6}O₂ | 4 | 0.6 | 2 | Ni | Cu | Li_{1.33} Mn_{0.6 7}O₂ | / | 1 | 1.33 | 0.67 | 0 |
| Exampl e 23 | Li₂Cu₂O₂@ Li_{1.33}M_{0.67} O₂ | Li₂C u₂O₂ | 4 | 1 | 2 | / | Cu | Li_{1.33} Mn_{0.6 7}O₂ | / | 1 | 1.33 | 0.67 | 0 |
| Exampl e 24 | Li₅FeO₄@ Li_{1.33}M_{0.67} O₂ | Li₅Fe O₄ | 1 | 1 | 0 | Fe | / | Li_{1.33} Mn_{0.6 7}O₂ | / | 1 | 1.33 | 0.67 | 0 |
| Exampl e 25 | Li_{5.5}Fe_{0.5}Co _{0.5}O₄@ Li_{1.33}M_{0.67} O₂ | Li_{5.5} Fe_{0.5} Co_{0.5} O₄ | 0.5 | 0.5 | 0 | Fe | Co | Li_{1.33} Mn_{0.6 7}O₂ | / | 1 | 1.33 | 0.67 | 0 |
| Exampl e 26 | Li_{5.2}Fe_{0.g}Co _{0.2}O₄@ Li_{1.33}M_{0.67} O₂ | Li_{5.2} Fe_{0.8} Co_{0.2} O₄ | 0.8 | 0.2 | 0 | Fe | Co | Li_{1.33} Mn_{0.6 7}O₂ | / | 1 | 1.33 | 0.67 | 0 |
| Exampl e 27 | Li_{5.6}Fe_{0.4}Co _{0.6}O₄@ Li_{1.33}M_{0.67} O₂ | Li_{5.6} Fe_{0.4} Co_{0.6} O₄ | 0.4 | 0.6 | 0 | Fe | Co | Li_{1.33} Mn_{0.6 7}O₂ | / | 1 | 1.33 | 0.67 | 0 |
| Exampl e 28 | Li₆CoO₄@ Li_{1.33}Mn_{0.67} O₂ | Li₆C oO₄ | 0 | 1 | 0 | / | Co | Li_{1.33} Mn_{0.6 7}O₂ | / | 1 | 1.33 | 0.67 | 0 |
| Exampl e 29 | Li₂NiO₂@L i_{1.26}Mn_{0.63}N i_{0.11}O₂ | Li₂Ni O₂ | 4 | 0 | 2 | Ni | / | Li_{1.26} Mn_{0.6 3}Ni_{0.i 1}O₂ | Mn, Ni | 0.7 | 1.26 | 0.52 | 0.22 |
| Exampl e 30 | Li₂NiO₂@L i_{1.2}Mn_{0.6}Ni_{0. 2}O₂ | Li₂Ni O₂ | 4 | 0 | 2 | Ni | / | Li_{1.2} Mn_{0.6} Ni_{0.2} O₂ | Mn, Ni | 0.5 | 1.2 | 0.4 | 0.4 |
| Exampl e 31 | Li₂NiO₂@L i_{1.1}Mn_{0.75}Ni _{0.25}O₂ | Li₂Ni O₂ | 4 | 0 | 2 | Ni | / | Li_{1.1} Mn_{0.7} 5Ni_{0.2 5}O₂ | Mn, Ni | 0.22 | 1.1 | 0.198 | 0.7 |

| | | | | | | | | | | | | | |
|---|---|---|---|---|---|---|---|---|---|---|---|---|---|
| Remarks: "/" in Table 1 means that there is no such element in the corresponding chemical formula. | | | | | | | | | | | | | |

### Effect example

### (1) Solid content and viscosity rebound test

Test objects: the positive electrode sheets prepared in Examples 1 to 31 and Comparative examples 1 to 8.

Test method: the viscosity of the positive electrode slurry was adjusted to 5000±500 mPa s, the actual solid content thereof was tested, and the positive electrode slurry was placed in a 500 mL beaker for 12h, then the viscosity thereof was tested again.

Test results: as shown in Table 2 below.

The preparation method of the test object batteries in the following effect examples (2) to (4) is as follows:
The prepared positive electrode sheet and the graphite negative electrode sheet were assembled into a 1Ah soft pack battery. After liquid injection, 4.5 V chemical forming was performed (that is, the first charging process of the battery after liquid injection, this process may activate the active substance in the battery and activate the lithium battery.) And after the aging process, a fresh battery was obtained.

### (2) Capacity test

Test method: at 25 °C, 2.0 V to 4.2 V, constant current and constant voltage charging (cut-off current 0.05C) was conducted to the battery cell assembled with the positive electrode prepared in the example at 0.33C, and constant current discharge was conducted at 0.33C, and the discharge capacity was the capacity thereof.

Test results: as shown in Table 2 below.

### (3) Cycle test

Test method: in the range of 2.5 V to 4.2 V, the battery cell assembled with the positive electrode prepared in the example was charged and discharged for 500 cycles at 45 °C at 1C, and the capacity ratio of the 500th cycle to the first cycle was recorded as the capacity retention rate thereof.

Test results: as shown in Table 2 below.

### (4) Storage gas production test

Test method: at 60 °C at 4.2 V, the battery cell assembled with the positive electrode prepared in the example was fully charged and stored, the volume difference between the 30th day and the 1st day was recorded, and this value was divided by the volume of the first day to get the storage volume growth rate thereof.

Test results: as shown in Table 2 below.

**Table 2**

| Numberin g | Component C | Component A + component B | Mass percentage of "component A + component B" in "total mass of component A + component B + component C" | Mass percentage of component A in "total mass of component A + component B" | Gram capacity (mAh/g) | Cycle capacity retention at 45 °C | Storage volume growth rate at 60 °C |
|---|---|---|---|---|---|---|---|
| Example 1 | **LiMn_{0.6}Fe_{0. 4}PO₄** | Li₂NiO₂@Li_{1.33} Mn_{0.67}O₂ | 5.0% | 98% | 137.6 | 92.8% | 5.3% |
| Example 2 | **LiFePO₄** | Li₂NO₂@Li_{1.33} | 5.0% | 98% | 147.7 | 94.3% | 3.5% |
| Example 3 | **LiNi_{0.9} Co_{0.0 6}Mn_{0.04}O₂** | Li₂NiO₂@Li_{1.33} Mn_{0.67}O₂ | 5.0% | 98% | 210.3 | 88.4% | 7.8% |
| Example 4 | **Li_{1.1}Ni_{0.4}M n_{0.6}O₂** | Li₂NiO₂@Li_{1.33} Mn_{0.67}O₂ | 5.0% | 98% | 173.4 | 93.4% | 3.8% |
| Example 5 | **LiCoO₂** | Li₂NO₂@Li_{1.33} | 5.0% | 98% | 196.4 | 86.2% | 8.9% |
| Example 6 | **LiNi_{1.5}Mn_{0. 5}O₄** | Li₂NiO₂@Li_{1.33} Mn_{0.67}O₂ | 5.0% | 98% | 143.5 | 81.9% | 13.1% |
| Example 7 | LiMn_{0.6}Fe_{0. 4}PO₄ | Li₂NiO₂@Li_{1.33} Mn_{0.67}O₂ | **2.0%** | 98% | 136.5 | 92.4% | 5.8% |
| Example 8 | LiMn_{0.6}Fe_{0. 4}PO₄ | Li₂NiO₂@Li_{1.33} Mn_{0.67}O₂ | **10.0 %** | 98% | 135.6 | 93.0% | 5.5% |
| Example 9 | LiMn_{0.6}Fe_{0. 4}PO₄ | Li₂NiO₂@Li_{1.33} Mn_{0.67}O₂ | **1.0%** | 98% | 134.5 | 91.9% | 6.0% |
| Example 10 | LiMn_{0.6}Fe_{0. 4}PO₄ | Li₂NiO₂@Li_{1.33} Mn_{0.67}O₂ | **20.0 %** | 98% | 134.3 | 92.7% | 5.7% |
| Example 11 | LiMn_{0.6}Fe 0.4PO4 | Li₂NiO₂@Li_{1.33} Mn_{0.67}O₂ | **30.0 %** | 98% | 133.7 | 92.5% | 6.0% |
| Example 12 | LiMn_{0.6}Fe_{0. 4}PO₄ | Li₂NiO₂gLi_{1.33} Mn_{0.67}O₂ | **0.9%** | 98% | 133.8 | 91.7% | 6.5% |
| Example 13 | LiMn_{0.6}Fe_{0. 4}PO₄ | Li₂NiO₂@Li_{1.33} Mn_{0.64}O₂ | **31.0%** | 98% | 132.8 | 92.4% | 6.2% |
| Example 14 | LiMn_{0.6}Fe_{0. 4}PO₄ | Li₂NiO₂@Li_{1.33} Mn_{0.67}O₂ | 5.0% | **99%** | 138.3 | 92.7% | 5.6% |
| Example 15 | LiMn_{0.6}Fe_{0. 4}PO₄ | Li₂NiO₂@Li_{1.33} Mn_{0.67}O₂ | 5.0% | **97%** | 137.0 | 92.7% | 5.1% |
| Example 16 | LiMn_{0.6}Fe_{0. 4}PO₄ | Li₂NiO₂@Li_{1.33} Mn_{0.67}O₂ | 5.0% | **99.1%** | 138.3 | 92.8% | **5.9%** |
| Example 17 | LiMn_{0.6}Fe_{0. 4}PO₄ | Li₂NiO₂@Li_{1.33} Mn_{0.67}O₂ | 5.0% | **96%** | 136.0 | 92.7% | 4.9% |
| Example 18 | LiMn_{0.6}Fe_{0. 4}PO4 | Li₂NiO₂@Li_{1.33} Mn_{0.67}O₂ | 5.0% | **90%** | 135.0 | 92.6% | 4.6% |
| Example 19 | LiMn_{0.6}Fe_{0. 4}PO₄ | Li₂NiO₂@Li_{1.33} Mn_{0.67}O₂ | 5.0% | **89%** | 133.8 | 92.5% | 4.5% |
| Example 20 | LiMn_{0.6}Fe_{0. 4}PO₄ | **Li₂Ni_{0.5}Cu_{0.5}O₂ @**Li_{1.33}Mn_{0.67}O 2 | 5.0% | 98% | 136.0 | 92.6% | 5.1% |
| Example 21 | LiMn_{0.6}Fe_{0. 4}PO₄ | **Li₂Ni_{0.8}Cu_{0.2}O₂ @**Li_{1.33}Mn_{0.67}O ₂ | 5.0% | 98% | 136.8 | 92.7% | 5.2% |
| Example 22 | LiMn_{0.6}Fe_{0. 4}PO₄ | **Li₂Ni_{0.4}Cu_{0.6}O₂ @**Li_{1.33}Mn_{0.67}O ₂ | 5.0% | 98% | 135.2 | 92.5% | 5.0% |
| Example 23 | LiMn_{0.6}Fe_{0. 4}PO₄ | **Li₂Cu₂O₂@**Li_{1. 33}Mn_{0.67}O₂ | 5.0% | 98% | 134.8 | 92.4% | 4.6% |
| Example 24 | LiMn_{0.6}Fe_{0. 4}PO₄ | **Li₅FeO₄@**Li_{1.33} Mn_{0.67}O₂ | 5.0% | 98% | 137.4 | 93.0% | 5.5% |
| Example 25 | LiMn_{0.6}Fe_{0. 4}PO₄ | **Li_{5.5}Fe_{0.5}Co_{0.5}O ₄@**Li_{1.33}Mn_{0.67} O₂ | 5.0% | 98% | 136.5 | 93.1% | 5.7% |
| Example 26 | LiMn_{0.6}Fe_{0. 4}PO₄ | **Li_{5.2}Fe_{0.5}Co_{0.2}O 4@**Li_{1.33}Mn_{0.67} O₂ | 5.0% | 98% | 136.9 | 93.1% | 5.8% |
| Example 27 | LiMn_{0.6}Fe_{0. 4}PO₄ | **Li_{5.6}Fe_{0.4}Co_{0.6}O 4@**Li_{1.33}Mn_{0.67} O₂ | 5.0% | 98% | 136.0 | 93.1% | 5.9% |
| Example 28 | LiMn_{0.6}Fe_{0. 4}PO₄ | **Li₆CoO₄@**Li_{1.3} 3Mn_{0.67}O₂ | 5.0% | 98% | 135.5 | 93.2% | 6.0% |
| Example 29 | LiMn_{0.6}Fe_{0. 4}PO₄ | **Li₂NiO₂@Li_{1.26} Mn_{0.63}Ni_{0.11}O₂** | 5.0% | 98% | 136.2 | 92.5% | 5.8% |
| Example 30 | LiMn_{0.6}Fe_{0. 4}PO₄ | **Li₂NiO₂@Li_{1.2} Mn_{0.6}Ni_{0.2}O₂** | 5.0% | 98% | 135.6 | 92.3% | 6.2% |
| Example 31 | LiMn_{0.6}Fe_{0. 4}PO₄ | **Li₂NiO₂@Li_{1.1} Mn_{0.75}Ni_{0.25}O₂** | 5.0% | 98% | 134.8 | 91.8% | 6.5% |
| Comparat ive example 1 | LiMn_{0.6}Fe_{0. 4}PO₄ | \ | \ | \ | 133.5 | 91.3% | 6.7% |
| Comparat ive example 2 | LiFePO₄ | \ | \ | \ | 143.5 | 93.3% | 5.3% |
| Comparat ive example 3 | LiNi_{0.9}Co_{0.0 6}Mn_{0.04}O₂ | \ | \ | \ | 208.4 | 86.5% | 11.0% |
| Comparat ive example 4 | Li_{1.1}Ni_{0.4}M n_{0.6}O₂ | \ | \ | \ | 170.3 | 91.4% | 5.8% |
| Comparat ive example 5 | LiCoO₂ | \ | \ | \ | 193.6 | 84.8% | 13.2% |
| Comparat ive example 6 | LiNi_{1.5}Mn_{0. 5}O₄ | \ | \ | \ | 138.2 | 78.8% | 16.2% |
| Comparat ive example 7 | \ | Li₂NiO₂@Li_{1.33} Mn_{0.67}O₂ | \ | \ | 118.9 | 48.4% | 13.4% |
| Comparat ive example 8 | \ | Li5FeO₄@Li_{1.33} Mn_{0.67}O₂ | \ | \ | 58.8 | 42.2% | 18.3% |

| | | | | | | | |
|---|---|---|---|---|---|---|---|
| Note: "\" means that the condition was not involved. | | | | | | | |

Analyzing the data in Table 1 to 2 gives:
Compared with Example 1, other conditions were the same, only the mass percentage of "component A+component B" accounting for "total mass of component A+component B+component C" was changed in Examples 7 to 13, thus have varying degrees of impact on gram capacity, cycle capacity retention rate at 45 °C, and storage volume growth rate at 60 °C. Specifically: when the mass percentage of "component A+component B" in the "total mass of component A+component B+component C" was not more than 5%, for example, 1% to 5%, with the increase of the mass percentage, the gram capacity and the cycle capacity retention rate at 45 °C were also increased, and the storage volume growth rate at 60 °C was decreased. When the mass percentage of "component A+component B" in the "total mass of component A+component B+component C" was greater than 5%, and not greater than 35%, for example, 5% to 31%, with the increase of the mass percentage, the gram capacity and the cycle capacity retention rate at 45 °C were decreased, and the storage volume growth rate at 60 °C was increased.

Compared with Example 1, other conditions were the same, only the mass percentage of the component A in "total mass of component A+component B+component C" was changed in Examples 14 to 19, thus have varying degrees of impact on gram capacity, cycle capacity retention rate at 45 °C, and storage volume growth rate at 60 °C. Specifically: when the mass percentage of the component A to the "total mass of component A+component B" was greater than 89%, such as 98% to 99.1%, with the increase of the mass percentage, the gram capacity and the cycle capacity retention rate at 45 °C remained basically unchanged, and the storage volume growth rate at 60 °C was increased. When the mass percentage of the component A to the "total mass of component A+component B" was less than 98%, such as 89% to 97%, with the decrease of the mass percentage, the gram capacity and the cycle capacity retention rate at 45 °C were decreased slightly, and the storage volume growth rate at 60 °C was decreased.

Compared with Example 1, other conditions were the same, and only changing the type of the component A of Examples 20 to 28 had varying degrees of impact on the gram capacity, cycle capacity retention rate at 45 °C, and storage volume growth rate at 60 °C. For example, in Example 23, when the component A was Li₂Cu₂O₂, the gram capacity was 134.8 mAh/g, the cycle capacity retention rate at 45 °C was 92.4%, and the storage volume growth rate at 60 °C was 4.6%. Compared with Examples 1, 20 to 22, and 24 to 28, Example 23 had the smallest storage volume growth rate at 60 °C.

Compared with Example 1, other conditions were the same, and only changing the type of the component B of Examples 29 to 31 had varying degrees of impact on the gram capacity, cycle capacity retention rate at 45 °C, and storage volume growth rate at 60 °C. For example, in Example 1, when the component B was **Li_{1.33}Mn_{0.67}O₂,** the gram capacity (137.6 mAh/g), cycle capacity retention rate at 45 °C (92.8%), and storage volume growth rate at 60 °C (5.3%) were all better than those of Example 29 to 31.

Compared with Example 1, Li₂NiO₂@Li_{1.33}Mn_{0.67}O₂ was not included in Comparative example 1, and the gram capacity and cycle capacity retention rate at 45 °C of Comparative example 1 were both decreased, and the storage volume growth rate at 60 °C thereof was increased.

Compared with Example 2, Li₂NiO₂@Li_{1.33}Mn_{0.67}O₂ was not included in Comparative example 2, and the gram capacity and cycle capacity retention rate at 45 °C of Comparative example 2 were both decreased, and the storage volume growth rate at 60 °C thereof was increased.

Compared with Example 3, Li₂NiO₂@Li_{1.33}Mn_{0.67}O₂ was not included in Comparative example 3, and the gram capacity and cycle capacity retention rate at 45 °C of Comparative example 3 were both decreased, and the storage volume growth rate at 60 °C thereof was increased.

Compared with Example 4, Li₂NiO₂@Li_{1.33}Mn_{0.67}O₂ was not included in Comparative example 4, and the gram capacity and cycle capacity retention rate at 45 °C of Comparative example 4 were both decreased, and the storage volume growth rate at 60 °C thereof was increased.

Compared with Example 5, Li₂NiO₂@Li_{1.33}Mn_{0.67}O₂ was not included in Comparative example 5, and the gram capacity and cycle capacity retention rate at 45 °C of Comparative example 5 were both decreased, and the storage volume growth rate at 60 °C thereof was increased.

Compared with Example 6, Li₂NiO₂@Li_{1.33}Mn_{0.67}O₂ was not included in Comparative example 6, and the gram capacity and cycle capacity retention rate at 45 °C of Comparative example 6 were both decreased, and the storage volume growth rate at 60 °C thereof was increased.

Compared with Examples 1 to 19, Comparative example 7 did not contain "component A+component B", and the gram capacity and cycle capacity retention rate at 45°C of Comparative example 7 were both decreased, and the storage volume growth rate at 60 °C thereof was increased.

Compared with Example 24, Comparative example 8 did not contain "component A+component B", and the gram capacity and cycle capacity retention rate at 45°C of Comparative example 8 were both significantly decreased, and the storage volume growth rate at 60 °C thereof was significantly increased.

By analyzing the above data, the inventors concluded that the reasons for the above experimental phenomenon may be:
1. The increase in the amount of lithium supplement agent "component A+component B" relative to the active substance component C lead to improved circulation and storage. However, the lithium supplement agent "component A+component B" had poor conductivity, and too much thereof had a negative impact on the electrical properties of the positive electrode material and made them worse.
2. The main effect of the component B was to stabilize the component A, the secondary effect was to supplement lithium, and the main effect of the component A was to supplement lithium. An increase in the amount of the component B improved the stability of the lithium supplement agent "component A+component B", but too much of the component B reduced the lithium supplement effect of the lithium supplement agent "component A+component B".
3. Different types of the component A produced different electrochemical properties.

In addition, the inventors have found through experiments that the component B in the lithium supplement agent may be more uniformly coated at the surface of the component A by adjusting the calcination temperature, specifically, the Mn source in the precursors of the component B was first calcined at a low temperature (for example, 300 °C to 500 °C), coated at the surface of the component A, and then calcined at a high temperature (for example, 600 °C to 900 °C), and reacted with the Li source in the precursors of the component B, to better form a lithium supplement agent in which the component B was more uniformly coated at the surface of the component A.

## Claims

1. A lithium supplement agent, comprising a component A and a component B;
a general chemical formula of the component A is: Li₆₋ₓM¹_{1-y}N¹_{y}O_{4-z}, wherein 0≤x≤5.95, 0≤y≤1, 0≤z≤2, M¹ is selected from one or a plurality of Fe, Ni, Co, Cu, Al, Mn, Ti, and Si; N¹ is selected from one or a plurality of Fe, Ni, Co, Cu, Al, Mn, Ti, and Si;
a general chemical formula of the component B is: Li_{1+(a/(2+a))}Mn_{2a/(2+a)}M²_{6/(2+a)-2}O₂, 0.2≤a≤1, M² is selected from one or a plurality of Fe, Ni, Co, Cu, Al, Mn, Ti, Si, Mg, Zr, Nb, La, Sr, and W;
the component B is at least partially located at a surface of the component A.

2. The lithium supplement agent of claim 1, wherein the lithium supplement agent satisfies one or a plurality of conditions a to c below;
a. the M¹ is Fe, Ni, Co, Cu, Al, Mn, Ti, or Si;
b. the N¹ is Fe, Ni, Co, Cu, Al, Mn, Ti, or Si;
c. the M² is Fe, Ni, Co, Cu, Al, Mn, Ti, Si, Mg, Zr, Nb, La, Sr, or W.

3. The lithium supplement agent of claim 1, satisfying one or a plurality of conditions d to j below;
d. a value range of the x is 0≤x≤5;
e. a value range of the y is 0≤y≤0.9;
f. a value range of the z is 0≤z≤2;
g. a value range of the a is 0.22≤a≤1;
h. the component B is at least partially coated at the surface of the component A;
i. a mass percentage of the component A accounting for a total mass of "the component A and the component B" is 89% to 99.1%;
j. the lithium supplement agent is a core-shell structure.

4. The lithium supplement agent of claim 1, wherein a chemical formula of the lithium supplement agent is ALi₅₊ₑFe₁₋ₑCoₑO₄@(1-A)Li_{1.33}MnO₂ or ALi₂Ni_{1-f}Cu_{f}O₂@(1-A)Li_{1.33}MnO₂;
wherein 0.8≤A<1; 0≤e≤1; 0≤f≤1;
A represents a mass percentage of Li₅₊ₑFe₁₋ₑCoₑO₄ in Li₅₊ₑFe₁₋ₑCoₑO₄@Li_{1.33}MnO₂, or a mass percentage of Li₂Ni_{1-f}Cu_{f}O₂ in Li₂Ni_{1-f}Cu_{f}O₂@Li_{1.33}MnO₂.

5. The lithium supplement agent of claim 1, wherein the general chemical formula of the component A is: Li₆₋ₓM¹_{1-y}N¹_{y}O_{4-z}, wherein 0≤x≤5.95, 0≤y≤1, 0≤z≤2, M¹ is Fe, Ni, Co, Cu, Al, Mn, Ti, or Si; N¹ is Fe, Ni, Co, Cu, Al, Mn, Ti, or Si; the general chemical formula of the component B is: Li_{1+(a/(2+a))}Mn_{2a/(2+a)}M²_{6/(2+a)-2}O₂, 0.2≤a≤1, M² is Fe, Ni, Co, Cu, Al, Mn, Ti, Si , Mg, Zr, Nb, La, Sr, or W; the component B is at least partially coated at the surface of the component A.

6. A preparation method of the lithium supplement agent of any of claims 1 to 5, comprising the steps of: mixing and sintering precursors of the component A and the component B to obtain the lithium supplement agent.

7. An electrochemical device comprising a positive electrode sheet, a negative electrode sheet, a separator, and an electrolyte, wherein the positive electrode sheet comprises a positive electrode current collector, a positive electrode active substance layer disposed on at least one surface of the positive electrode current collector, and the lithium supplement agent of any of claims 1 to 5;
the positive electrode active substance layer comprises an active substance, and the active substance comprises one or a plurality of a lithium iron phosphate, a lithium manganese iron phosphate, a nickel-cobalt-manganese ternary material, a lithium cobaltate, a lithium-rich manganese-based oxide, and a lithium manganese nickelate;
the lithium iron phosphate and the lithium manganese iron phosphate each independently satisfy a structural formula: LiₐMnₘFe₁₋ₘ₋ₙM³ₙPO₄, wherein, 0.9≤a≤1.10, 0≤m≤1.0, 0≤n≤0.02, 0.5≤m/(1-m-n)≤0.9, the M³ element comprises one or a plurality of Ti, Mg, Ni, Co, Al, V, Cr, Zr, and Nb;
the nickel-cobalt-manganese ternary material satisfies a structural formula: Li₁₊ₐ[NiₓCo_{y}Mn_{z}N²_{1-x-y-z}]O_{2-b}A_{b}, 0.7≤x<1, 0≤y<0.3, 0≤z<0.3, -0.2<a<0.2, 0≤b<0.1, wherein the N² element comprises one or a plurality of Sr, Y, Al, Ti, Mg, W, Mo, B, V, Se, Nb, Ru, Rh, Pd, Sb, Te, Ce, Ca, Zn, Ni, Co, Mn, and Zr, the A element comprises one or a plurality of F, N, Cl, S, and P;
the lithium cobaltate satisfies a structural formula: LiₐCo_{1-b}M⁴_{b}O_{2-b}, wherein the M⁴ element is selected from one or a plurality of Na, Mg, Al, Ti, Zr, Y, Ha, Ni, Mn, V, Cr, La, and Ce, 0.99≤a≤1.01, 0<b≤0.05;
the lithium-rich manganese-based oxide satisfies a structural formula: zLi₂MnO₃·(1-z)LiM⁵O₂, 0≤z≤1, and the M⁵ element is selected from one or a plurality of Ni, Co, and Mn;
the lithium nickel manganese oxide satisfies a structural formula: LiM⁶ _{x+y}Ni_{0.5-x}Mn_{1.5-y}O₄, wherein the M⁶ element is selected from one or a plurality of Co, Al, Cr, Fe, Mg, Zr, and Ti, 0≤x<0.2, 0≤y<0.2.

8. The electrochemical device of claim 7, wherein the active substance is lithium iron phosphate, lithium manganese iron phosphate, nickel-cobalt-manganese ternary material, lithium cobaltate, lithium-rich manganese-based oxide, or lithium manganese nickelate; a chemical formula of the lithium supplement agent is ALi₅₊ₑFe₁₋ₑCoₑO₄@(1-A)Li_{1.33}MnO₂ or ALi₂Ni_{1-f}Cu_{f}O₂@(1-A)Li_{1.33}MnO₂;
wherein 0.8≤A< 1; 0≤e≤1; 0≤f≤1; the A represents a mass percentage of Li₅₊ₑFe₁₋ₑCoₑO₄ in Li₅₊ₑFe₁₋ₑCoₑO₄@Li_{1.33}MnO₂, or a mass percentage of Li₂Ni_{1-f}Cu_{f}O₂ in Li₂Ni_{1-f}Cu_{f}O₂@Li_{1.33}MnO₂.

9. An electronic device, comprising the electrochemical device of claim 7 or 8.

## Patentansprüche

1. Lithiumergänzungsmittel, umfassend eine Komponente A und eine Komponente B;
eine allgemeine chemische Formel der Komponente A lautet: Li₆₋ₓM¹_{1-y}N¹_{y}O_{4-z}, wobei 0≤x≤5,95, 0≤y≤1, 0≤z≤2, M¹ ausgewählt ist aus einem oder einer Vielzahl von Elementen von Fe, Ni, Co, Cu, Al, Mn, Ti und Si; N¹ ausgewählt ist aus einem oder einer Vielzahl von Elementen von Fe, Ni, Co, Cu, Al, Mn, Ti und Si;
eine allgemeine chemische Formel der Komponente B lautet: Li_{1+(a/(2+a))}Mn_{2a/(2+a)}, M²_{6/(2+a)-2}O₂, wobei 0,2≤a≤1, M² ausgewählt ist aus einem oder einer Vielzahl von Fe, Ni, Co, Cu, Al, Mn, Ti, Si, Mg, Zr, Nb, La, Sr und W;
die Komponente B sich wenigstens teilweise auf der Oberfläche der Komponente A befindet.

2. Lithiumergänzungsmittel gemäß Anspruch 1, wobei das Lithiumergänzungsmittel eine oder eine Vielzahl von untenstehenden Bedingungen a bis c erfüllt:
a. M¹ ist Fe, Ni, Co, Cu, Al, Mn, Ti oder Si;
b. N¹ ist Fe, Ni, Co, Cu, Al, Mn, Ti oder Si;
c. M² ist Fe, Ni, Co, Cu, Al, Mn, Ti, Si, Mg, Zr, Nb, La, Sr oder W.

3. Lithiumergänzungsmittel gemäß Anspruch 1, das eine oder eine Vielzahl von untenstehenden Bedingungen d bis j erfüllt:
d. ein Wertebereich von x ist 0≤x≤5;
e. ein Wertebereich von y ist 0≤y≤0,9;
f. ein Wertebereich von z ist 0≤z≤2 ;
g. ein Wertebereich von a ist 0,22 ≤ a ≤ 1:
h. die Komponente B bedeckt wenigstens teilweise die Oberfläche der Komponente A.
i. ein Massenanteil der Komponente A an der Gesamtmasse von "Komponente A und Komponente B" zwischen 89 % und 99,1 % liegt.
j. das Lithiumergänzungsmittel eine Kern-Hülle-Struktur aufweist.

4. Lithiumergänzungsmittel nach Anspruch 1, wobei die chemische Formel des Lithiumergänzungsmittels ALi₅₊ₑFe₁₋ₑCoₑO₄@(1-A)Li_{1,33} MnO₂ oder ALi₂Ni_{1-f}Cu_{f}O_{2@}(1-A)Li_{1,33}MnO₂ ist; wobei 0,8 ≤A≤1; 0 ≤ e ≤1; 0 ≤ f ≤ 1;
A einen Massenprozentsatz von Li₅₊ₑFe₁₋ₑCoₑO₄ in Li₅₊ₑFe₁ₑCoₑO₄@Li_{1.33}MnO₂ oder einen Massenprozentsatz von Li₂Ni₁₋₁Cu_{f}O₂ in Li₂Ni_{1-f}Cu_{f}O₂@Li_{1.33}MnO₂ darstellt.

5. Lithiumergänzungsmittel gemäß Anspruch 1, wobei die allgemeine chemische Formel der Komponente A lautet: Li₆₋ₓM¹_{1-y}N¹_{y}O_{4-z}, wobei 0≤x≤5,95, 0≤y≤1, 0≤z≤2, M¹ Fe, Ni, Co, Cu, Al, Mn, Ti oder Si ist; N¹ Fe, Ni, Co, Cu, Al, Mn, Ti oder Si ist; die allgemeine chemische Formel der Komponente B lautet: Li_{1+(a/(2+a))}Mn_{2a/(2+a)}M² _{6/(2+a)-2}O₂, wobei 0,2≤a≤1, M² ist Fe, Ni, Co, Cu, Al, Mn, Ti, Si, Mg, Zr, Nb, La, Sr oder W; die Komponente B ist zumindest teilweise auf der Oberfläche der Komponente A aufgebracht.

6. Verfahren zur Herstellung des Lithiumergänzungsmittels gemäß einem der Ansprüche 1 bis 5, umfassend die Schritte von: Mischen und Sintern der Vorläufer der Komponente A und der Komponente B, um das Lithiumergänzungsmittel zu erhalten.

7. Elektrochemische Vorrichtung, umfassend ein positives Elektrodenblatt, ein negatives Elektrodenblatt, einen Separator und einen Elektrolyten, wobei das positive Elektrodenblatt einen positiven Elektrodenstromkollektor, eine positive Elektroden-Aktivmaterialschicht, die auf wenigstens einer Oberfläche des positiven Elektrodenstromkollektors angeordnet ist, und das Lithiumergänzungsmittel gemäß einem der Ansprüche 1 bis 5 umfasst;
die positive Elektroden-Aktivmaterialschicht ein aktives Material umfasst und das aktive Material eines oder eine Vielzahl umfasst von einem Lithiumeisenphosphat, einem Lithiummangan-Eisenphosphat, einem ternären Nickel-Kobalt-Mangan-Material, einem Lithiumkobaltat, einem lithiumreichen Manganoxid und einem Lithiummangan-Nickelat;
wobei das Lithiumeisenphosphat und das Lithiummangan-Eisenphosphat jeweils unabhängig voneinander einer Strukturformel entsprechen: LiₐMnₘFe₁₋ₘ₋ₙM³ₙPO₄, wobei 0,9≤a≤1,10, 0≤m≤1,0, 0≤n≤0,02, 0,5≤m/(1-m-n)≤0,9, das Element M³ ein oder mehrere Elemente aus Ti, Mg, Ni, Co, Al, V, Cr, Zr und Nb umfasst;
das ternäre Nickel-Kobalt-Mangan-Material einer Strukturformel entspricht: Li₁₊ₐ[NiₓCo_{y}Mn_{z}N²_{1-x-y-z}]O_{2-b}A_{b}, 0,7≤x<1, 0≤y<0,3, 0≤z<0,3, -0,2<a<0,2, 0≤b<0,1, wobei das Element N² eines oder eine Vielzahl von Elementen von Sr, Y, Al, Ti, Mg, W, Mo, B, V, Se, Nb, Ru, Rh, Pd, Sb, Te, Ce, Ca, Zn, Ni, Co, Mn und Zr umfasst, das Element A eines oder mehrere der Elemente F, N, Cl, S und P umfasst;
das Lithiumkobaltat einer Strukturformel entspricht: LiₐCo_{1-b}M⁴_{b}O_{2-b}, wobei das Element M⁴ ausgewählt ist aus einem oder mehreren Elementen von von Na, Mg, Al, Ti, Zr, Y, Ha, Ni, Mn, V, Cr, La und Ce, 0,99≤a≤1,01, 0<b≤0,05;
das lithiumreiche Manganoxid die Strukturformel zLi₂MnO₃·(1-z)LiM⁵O₂ erfüllt, wobei 0≤z≤1 ist und das Element M⁵ ausgewählt ist aus einem oder einer Vielzahl von Ni, Co und Mn; das Lithium-Nickel-Mangan-Oxid entspricht der Strukturformel: LiM⁶_{x+y}Ni_{0.5-x}Mn_{1.5-y}O₄, wobei das Element M⁶ ausgewählt ist aus einem oder einer Vielzahl von Elementen von Co, Al, Cr, Fe, Mg, Zr und Ti, 0≤x<0,2, 0≤y<0,2.

8. Elektrochemische Vorrichtung nach Anspruch 7, wobei das aktive Material Lithiumeisenphosphat, Lithiummangan- Eisenphosphat, ein ternäres Nickel-Kobalt-Mangan-Material, Lithiumkobaltat, ein lithiumreiches Manganoxid oder Lithiummangan-Nickelat ist; die chemische Formel des Lithiumergänzungsmittels lautet ALi₅₊ₑFe₁₋ₑCoₑO₄@(1-A)Li_{1.33}MnO₂, oder ALi₂Ni_{1-f}Cu_{f}O₂@(1-A)Li_{1.33}MnO₂;
wobei 0,8≤A<1; 0≤e≤1; 0≤f≤1; A einen Massenprozentsatz von Li₅₊ₑFe₁₋ₑCoₑO₄ in Li₅₊ₑFe₁₋ₑCoₑO₄@Li_{1.33}MnO₂ oder einen Massenprozentsatz von Li₅₊ₑFe₁₋ₑCOₑO₄ in Li₅₊ₑFe₁₋ₑCoₑO₄@Li_{1.33}MnO₂ darstellt.

9. Elektronische Vorrichtung, umfassend die elektrochemische Vorrichtung gemäß Anspruch 7 oder 8.

## Revendications

1. Agent complémentaire au lithium, comprenant un composant A et un composant B; la formule chimique générale du composant A est : Li₆₋ₓM¹_{1-y}N¹_{y}O_{4-z}, où 0≤x≤5,95, 0≤y≤1, 0≤z≤2, M¹ est choisi parmi un ou plusieurs des éléments Fe, Ni, Co, Cu, Al, Mn, Ti et Si; N¹ est choisi parmi un ou plusieurs des éléments Fe, Ni, Co, Cu, Al, Mn, Ti et Si;
la formule chimique générale du composant B est: Li_{1+(a/(2+a))}Mn_{2a/(2+a)}M²_{6/(2+a)-2}O₂, 0,2≤a≤1, M² est choisi parmi un ou plusieurs des éléments Fe, Ni, Co, Cu, Al, Mn, Ti, Si, Mg, Zr, Nb, La, Sr et W;
le composant B est au moins partiellement situé à la surface du composant A.

2. Agent complémentaire au lithium selon la revendication 1, dans lequel l'agent de supplémentation en lithium satisfait à une ou plusieurs des conditions a à c ci-dessous;
a. le M¹ est Fe, Ni, Co, Cu, Al, Mn, Ti ou Si;
b. le N¹ est Fe, Ni, Co, Cu, Al, Mn, Ti ou Si;
c. le M² est Fe, Ni, Co, Cu, Al, Mn, Ti, Si, Mg, Zr, Nb, La, Sr ou W.

3. Agent complémentaire au lithium selon la revendication 1, satisfaisant à une ou plusieurs des conditions d à j ci-dessous;
d. une plage de valeurs du x est 0≤x≤5;
e. une plage de valeurs du y est 0≤y≤0,9;
f. une plage de valeurs du z est 0≤z≤2 ;
g. une plage de valeurs du a est 0,22≤a≤1 :
h. le composant B est au moins partiellement recouvert à la surface du composant A;
i. le pourcentage massique du composant A par rapport à la masse totale du « composant A et du composant B » est compris entre 89 % et 99,1 % ;
j. l'agent de supplément de lithium est une structure à noyau-enveloppe.

4. Agent complémentaire au lithium selon la revendication 1, dans lequel la formule chimique de l'agent de supplément de lithium est ALi₅₊ₑFe₁₋ₑ CoₑO₄@(1-A)Li_{1,33} MnO₂ ou ALi₂Ni_{1-f}Cu_{f}O₂@(1-A)Li_{1,33}MnO₂; où 0,8 ≤A≤1 ; 0 ≤ e ≤1; 0 ≤ f ≤ 1;
A représente un pourcentage massique de Li₅₊ₑFe₁₋ₑCoₑO₄ dans Li₅₊ₑFe₁ₑCoₑO₄@Li_{1.33}MnO₂, ou un pourcentage massique de Li₂Ni_{1-f}Cu_{f}O₂ in Li₂Ni_{1-f}Cu_{f}O₂@Li_{1.33}MnO₂.

5. Agent complémentaire au lithium selon la revendication 1, dans lequel la formule chimique générale du composant A est: Li₆₋ₓM¹_{1-y}N¹_{y}O_{4-z}, où 0≤x≤5,95, 0≤y≤1, 0≤z≤2, M¹ est Fe, Ni, Co, Cu, Al, Mn, Ti ou Si; N¹ est Fe, Ni, Co, Cu, Al, Mn, Ti ou Si; la formule chimique générale du composant B est : Li_{1+(a/(2+a))}Mn_{2a/(2+a)}M²_{6/(2+a)-2}O₂, 0,2≤a≤1, M² est Fe, Ni, Co, Cu, Al, Mn, Ti, Si, Mg, Zr, Nb, La, Sr ou W; le composant B est au moins partiellement recouvert à la surface du composant A.

6. Procédé de préparation de l'agent complémentaire au lithium selon l'une quelconque des revendications 1 à 5, comprenant les étapes consistant à: mélanger et fritter les précurseurs du composant A et du composant B pour obtenir l'agent de supplément de lithium.

7. Dispositif électrochimique comprenant une feuille d'électrode positive, une feuille d'électrode négative, un séparateur et un électrolyte, dans lequel la feuille d'électrode positive comprend un collecteur de courant d'électrode positive, une couche de substance active d'électrode positive disposée sur au moins une surface du collecteur de courant d'électrode positive, et l'agent de supplément de lithium selon l'une quelconque des revendications 1 à 5;
la couche de substance active d'électrode positive comprend une substance active, et la substance active comprend un ou plusieurs des composés suivants:
un phosphate de fer lithié, un phosphate de manganèse et de fer lithié, un matériau ternaire nickel-cobalt-manganèse, un cobaltate de lithium, un oxyde à base de manganèse riche en lithium et un nickelate de manganèse lithié ;le phosphate de fer lithié et le phosphate de manganèse et de fer lithié satisfont chacun indépendamment à une formule structurale: LiₐMnₘFe₁₋ₘ₋ₙM³ₙPO₄, dans laquelle 0,9 ≤ a <1,10, 0≤m≤1,0, 0≤n≤0,02, 0,5≤m/(1-m-n) ≤0,9, l'élément M³ comprend un ou plusieurs éléments parmi Ti, Mg, Ni, Co, Al, V, Cr, Zr et Nb;
le matériau ternaire nickel-cobalt-manganèse satisfait à une formule structurale: Li₁₊ₐ[NiₓCo_{y}Mn_{z}N²_{1-x-y-z}]O_{2-b}A_{b}, 0.7≤x<1, 0≤y<0,3, 0≤z<0,3, -0,2<a<0,2, 0:5b<0,1 dans lequel l'élément N₂ comprend un ou plusieurs des éléments Sr, Y, Al, Ti, Mg, W, Mo, B, V, Se, Nb, Ru, Rh, Pd, Sb, Te, Ce, Ca, Zn, Ni, Co, Mn et Zr, l'élément A comprend un ou plusieurs F, N, Cl, S et P; le cobaltate de lithium satisfait à une formule structurale:
LiₐCo_{1-b}M⁴_{b}O_{2-b}, dans laquelle l'élément M⁴ est choisi parmi un ou plusieurs éléments parmi Na, Mg, Al, Ti, Zr, Y, Ha, Ni, Mn, V, Cr, La et Ce, 0.99≤a≤1,01, 0<b≤0,05;
l'oxyde à base de manganèse riche en lithium satisfait à la formule structurale: zLi₂MnO₃·(1-z)LiM⁵O₂, 0≤z≤1, et l'élément M⁵ est choisi parmi un ou plusieurs des éléments Ni, Co et Mn; l'oxyde de lithium-nickel-manganèse satisfait à la formule structurale: LiM⁶_{x+y}Ni_{0.5-x}Mn_{1.5-y}O₄, dans laquelle l'élément M⁶ est choisi parmi un ou plusieurs éléments parmi Co, Al, Cr, Fe, Mg, Zr et Ti, 0≤x<0.2, 0≤y<0.2.

8. Dispositif électrochimique selon la revendication 7, dans lequel la substance active est du phosphate de fer lithié, du phosphate de manganèse et de fer lithié, un matériau ternaire nickel-cobalt-manganèse, du cobaltate de lithium, un oxyde à base de manganèse riche en lithium ou du nickelate de manganèse lithié; la formule chimique de l'agent de supplément de lithium est ALi₅₊ₑFe₁₋ₑCoₑO₄@(1-A)Li_{1.33}MnO₂ ou ALi₂Ni₁₋₁Cu₁O₂@(1-A)Li_{1.33}MnO₂; où 0,8≤A< 1; 0≤e≤1; 0≤f≤1 ; A représente un pourcentage massique de Li₅₊ₑFe₁₋ₑCoₑO₄ dans Li₅₊ₑFe₁₋ₑCoₑO₄@Li_{1.33}MnO₂ ou un pourcentage massique de Li₂Ni_{1-f}Cu_{f}O₂ dans Li₂Ni₁₋₁Cu_{f}O₂@Li_{1.33}MnO₂.

9. Dispositif électronique, comprenant le dispositif électrochimique selon la revendication 7 ou 8.
